Europäisches Patentamt

European Patent Office

Office européen des brevets

(11) Publication number: **0 128 324**
**B1**

# EUROPEAN PATENT SPECIFICATION

(45) Date of publication of patent specification: **12.07.89**

(51) Int. Cl.⁴: **A 61 C 19/00**

(21) Application number: **84104906.7**

(22) Date of filing: **02.05.84**

(54) **Visible light curing apparatus for curing dental objects.**

(30) Priority: **06.05.83 US 492284**

(43) Date of publication of application:
**19.12.84 Bulletin 84/51**

(45) Publication of the grant of the patent:
**12.07.89 Bulletin 89/28**

(84) Designated Contracting States:
**AT BE CH DE FR GB IT LI LU NL SE**

(56) References cited:
**EP-A-0 037 461**
**DE-A-3 033 681**
**DE-A-3 209 547**
**DE-U-8 209 544**
**DE-U-8 226 439**
**GB-A-2 098 439**
**US-A-4 298 005**
**US-A-4 385 344**

(73) Proprietor: **DENTSPLY INTERNATIONAL, INC.**
**570 West College Avenue P.O. Box 872**
**York Pennsylvania 17405 (US)**

(72) Inventor: **Gonser, Donald I.**
**1749 Crescent Road**
**York, PA 17403 (US)**
Inventor: **Eden, George T.**
**1905 Woodland Road**
**York, PA 17403 (US)**
Inventor: **Tateosian, Louis H.**
**209 Reynolds Mill Road**
**York, PA 17403 (US)**

(74) Representative: **Wächtershäuser, Günter, Dr.**
**Tal 29**
**D-8000 München 2 (DE)**

Courier Press, Leamington Spa, England.

## Description

The present invention relates to a visible light curing apparatus for curing dental objects comprising support means defining a substantially horizontal surface having a center axis for supporting a dental object composed at least in part of light curable material and

collimated light sources positioned to direct collimated light onto said object. Such an apparatus is known from DE—A—3 209 547. Another visible light curing apparatus for dental purposes is known from DE—U 8 209 544.2. It comprises an array of light sources which do not produce collimated light. Neither of the two apparatuses provides a sufficiently uniform curing of the dental material.

Light curing apparatus and techniques, as have been used in dental applications to date, have been directed primarily to the use of light curing of restorative materials, such as in oral cavities. In such applications, which have been reasonably successful, a light source is positioned at or substantially at contact with the material to be cured, such that a highly focused or condensed beam of light is directed on a relatively small area of curable material. For example, assignee's Prisma Lite system employs a light gun, or applicator as shown in US—A—4 385 344. Prior to this visible light application, UV curable materials and UV sources had been used in the dental industry. Generally, such dental applications have been limited to small localized fillings and the like.

In the field of fabricating prosthetics, dentures and the like, little work has been done heretofore in the use of light polymerizable or curable materials. However, recent technique and material developments for dental prosthetic and restorative work have made it feasible to produce dentures much more quickly and reliably than has been done in the prior art. These new techniques and methods for making artificial teeth can be used by dentists and/or dental laboratories to fabricate dentures and restorations, and can be extended to the making of medical prosthetics and devices, or portions thereof, e.g., custom made hearing aids, maxio-facial prostheses, cranial prostheses, and other objects such as custom-formed shoe inserts.

The operation of light curing a denture or prosthetic bridge presents certain problems which are not encountered using more conventional methods. However, once solved the light curing operation permits a much more efficient denture making process. Any satisfactory apparatus for light curing of dentures requires a substantial depth and degree of curing, much more than for curing coatings. Dentures come in vastly different sizes and shapes, and the penetration requirements vary with the size and configuration. A standardized light source apparatus for curing dentures needs to provide light of an intensity to be safely above the zone of reciprocity failure, i.e., the zone below which curing is not achieved no matter how long light is applied.

Further, an apparatus is needed which ensures that light is incident at all possible angles onto all features of the denture, so that all portions of the material are light penetrated and cured. Thus, there is a great demand placed upon any proposed apparatus and technique for photocuring a wide range of sizes and shapes of restorative objects, which apparatus must be safe for people working in the immediate area, and which must operate with a sufficient efficiency to minimize apparatus bulk and expense, thereby ensuring low maintenance and maximum reliability of operation. With the provision of such apparatus, dentures can be cured in a matter of minutes, which is a highly substantial advance over the prior capability of the industry.

### Summary of the invention

It is an object of this invention to provide a visible light curing apparatus for dental objects such as dentures, cranial prostheses, dental bridges, and other prostheses, in a relatively short period of time to obtain uniform curing.

This problem is solved by the apparatus of Claim 1. Preferred embodiments are defined in the subclaims. Specifically these preferred embodiments can have the following features:

The visible light curing apparatus can have a rotatable support means, e.g. a table or, platform for supporting an item or object composed at least in part of light curable material, and an array of one or more collimated light sources positioned to direct beams of collimated light from different angles on to the support means, and thus onto the item or object which is placed on the support means. Each of the light sources, which preferably include a tungsten halogen lamp with a parabolic reflector can be positioned for providing overlapping light coverage of the entire support surface. The light sources can be filtered to provide a spectral content with a bandpass of wavelengths in the 350—600 nm range, and most particularly in the 400—500 nm range and other wavelengths produced are greatly attenuated.

### Brief description of the drawings

Figure 1 is a side schematic view of the apparatus of this invention, showing the positioning of the lamps with respect to the rotatable table on which the object, for example a denture, is placed.

Figure 2 is a top schematic view of the apparatus used in the practice of this invention, along lines 2—2.

Figure 3 is a cross-sectional view of a lamp for the apparatus of Figure 1 and 2.

### Description of the preferred embodiment

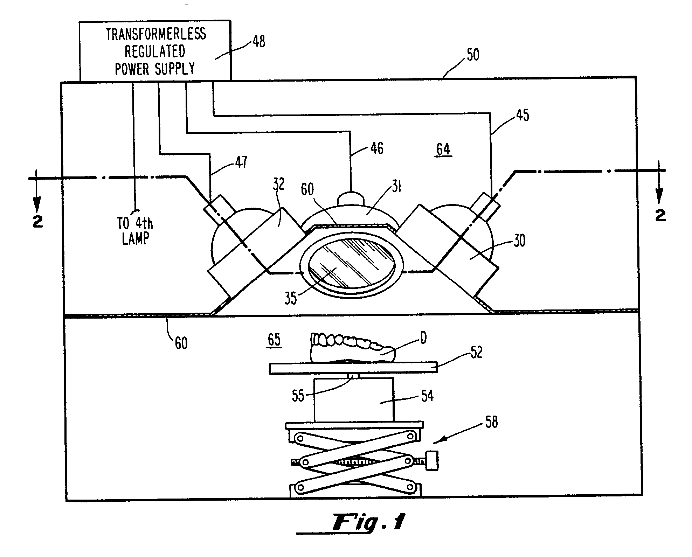

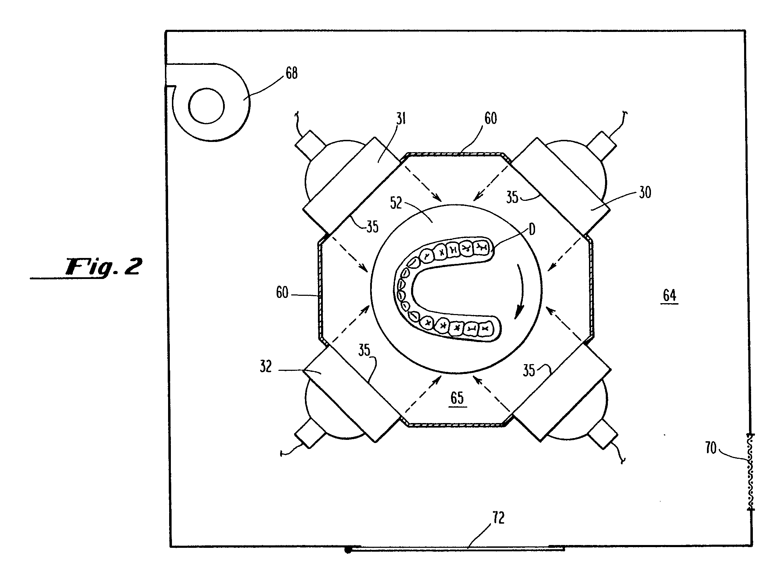

Referring now to Figures 1 and 2, there is seen apparatus for light curing of a relatively large size restorative object such as a denture. A denture, designated D, is shown positioned on a rotatable table 52. The denture is made of a suitable base material such as disclosed in co-pending U.S.

Application Serial Number 486,688, titled "Organic Amine Salt of an An Acid, Manufacture and Use As Accelerator", assigned to the same assignee. While the drawings illustrate a denture as the object being cured, it is to be understood that the invention relates broadly to the curing of medical objects of any sort, including particularly prostheses, portions of medical devices that must be custom shaped or contoured, and medical assist devices such as custom-formed shoe inserts.

Positioned to direct beams of collimated light at the table 52, and thus at a denture D placed thereon, is a collimated light source means comprising one or more lamps, or light sources. In the preferred embodiment of this invention, four such lamps are used. In Figure 1, lamps 30, 31 and 32 are shown positioned relative to the table 52. Figure 2 illustrates four lamp surfaces 35 positioned at approximately 90° intervals around the center axis of table 52. The lamp outputs are directed through surfaces, or faces 35, which in the preferred embodiment are about 6 cm (2 3/8 inches) in diameter. The light output from each lamp is collimated, and thus casts a light beam of about 6 cm (2 3/8 inches) diameter onto the table 52. The lamps are tilted such that the axis of each light beam is at an angle within the range of about 20—45° from the horizontal surface of table 52. The preferred angle is about 30°. Further, the lamps are directed so that all portions of the table 52, or denture D resting thereon, are irradiated, the light beams having overlapping portions. By this means, wherever the denture is positioned on the table, during the course of each rotation light will be incident on the denture so as to penetrate to all portions thereof.

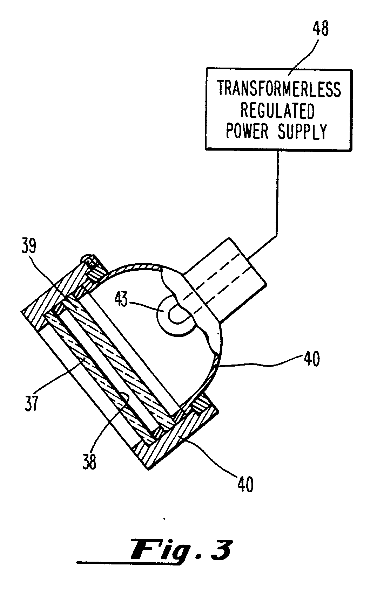

As seen in detail in Figure 3, each light means has a parabolic reflector 40, and a bulb or lamp 43 positioned at the center thereof. The lamp is preferably a tungsten halogen bulb, but other types of bulbs may be used. In the preferred embodiment, the lamp is driven by a transformerless regulated power supply 48, which also contains suitable timing means for timing the length of turn on of each lamp. The lamps are designed for rated power of 200 watts and 41 volt operation, and preferably are operated at about −20% of rated voltage, or 32.8 volts. At this voltage, each lamp delivers about 54.7 mw/cm$^2$ of light in the 400—500 bandwidth, at a distance of about 10 cm, i.e. the distance from the center of the light surface 35 to the center of the table. Each light means also contains a bandpass filter 37, having a heat reflecting film 38 on the bulb side thereof, and a heat absorbing filter 39.

As seen in Figure 1, leads 45, 46 and 47, from the three light sources illustrated, are connected through the top of housing 50 to the power supply 48. A like lead is provided to the fourth lamp, and if five or more lamps are utilized they are powered in the same manner. The table 52 is rotated by a motor 54 which drives shaft 55 which is connected through the table. In practice, the speed of rotation of the table is not believed critical, but it has been found that a range of about 0.5 to 50 rpm is suitable and about 2 rpm is a preferred speed. Further means 58 are employed to raise or lower the table 52, which may be necessary to accommodate dentures of mounted on models of different sizes. It has been found that a 10.2 cm (4 inch) diameter table is suitable to accommodate any anticipiated denture size. For other applications involving curing of prosthetic objects, a larger table is used. Depending upon the height of the table, the lamps, which are fixed in position, may be within a range of 5 to 13 cm from the surface of the denture or object of similar size, and on the average the distance from the rim of each light source to the center of the table is about 10 cm. For larger medical or medical-related objects, a greater average distance is utilized.

While the preferred embodiment of a rotatable table is disclosed, the invention embraces any means for moving the object to be cured relative to the light source means, e.g. the lights may be moved, or the table can be moved through a different cycle, which may include raising and lowering as well as rotating.

Still referring to Figures 1 and 2, there is shown an enclosure 60, preferably made of sheet metal, which encloses an upper chamber 64 within the overall housing 50. The table 52 and denture D are in a region 65, which is accessible through a door 72. The enclosure wall 60 has circular openings into which the faces 35 of the light sources are positioned. The lamps are connected to the sheet metal 60 with suitable mounting and connecting means, so as to provide a substantially air tight separation between spaces 64 and 65. As illustrated in Figure 2, a fan or other air circulating means 68 is provided, along with one or more vents 70, to provide positive or negative pressure for air cooling of the light sources. The enclosure 60 provides that the air circulation, which is necessary for cooling, does not affect the environment where the denture is, thereby keeping it free of circulating dust particles or other elements which could be detrimental to proper curing and formation of the denture.

The curing unit of the present invention also may incorporate a housing 50 having walls or doors 72 that are visually transparent to allow inspection during operation of the unit in a closed operating mode. It is important for maintenance purposes that an operator be able to observe whether the lamps are operating. The transparent door, wall or wall portions may form one of the safety filters for protection of the operator's eyes while allowing a clear view of the unit's exact operation for precision of operation, particularly where a remake is involved caused by an operation caused flaw. The filtering arrangement also eliminates the emission of dangerous light waves such as UV waves.

In practice, whenever the denture or medical object has been formed of the light curable material, the operator opens door 72 in the housing 50 and places the denture on the table 52.

The operator then sets a timer, which is part of the apparatus in the box designated 48, and energizes the system for the programmed time of curing. In the preferred embodiment, the transformerless power supply 48 is as shown in co-pending application, titled Power Control Apparatus With Optical Isolation Feedback Means, D-154, U.S. serial No. 492,285, assigned to the same assignee. A soft start of power supplied to the lamps is provided, i.e. the voltage is ramped up to the designated power. By operating at about 20% less than rated value, a relatively long lifetime of about 600 hours can be obtained for the lamps used in the preferred embodiment.

In practice, the lamps may have a rating in the range of 30—60 volts, and may be operated at 10 to 25% reduction of rated voltage. Depending upon the size of the object to be cured, the operator adjusts the level of table 52 appropriately. As the object is rotated, light from each of the four light sources is incident thereon at continuously different angles, such that all portions of the object are irradiated. By holding the lamps within about 10 cm from the object surface, and providing collimated beams with a diameter of at least about 2 inches and a beam power of at least about 50 mw/cm$^2$ at the denture, there is more than sufficient light power to thoroughly penetrate and cure all portions of the object.

As used in this specification and the claims hereto, the term "object" or "medical object" means any object which is shaped and then light cured for use in a medical or medically related application, or any portion of such an object, or any portion of a device used in any medical or medically related application. Also it is to be understood that the phrase collimated light refers to a beam of light having light flux lines which are substantially parallel, it being understood that it is physically impossible to generate a precisely and totally collimated beam. The simple parabolic reflector as used in the apparatus of this invention provides a beam which is sufficiently collimated that there is relatively little loss of light flux from the light source face 35 to the position of the denture, i.e. there is relatively little loss over the beam distance of 5—13 cm. Further, while the lamp which is preferred for use in the apparatus of this invention has a rated voltage of 41 volts, and a rated power of about 200 watts, and these parameters have been found to provide excellent results, the lamps can be designed for different power and voltage ratings within the scope of this invention. Likewise the power supply can be a conventional power supply utilizing a transformer or other design. However, it is noted that the combination of all of the design parameters as has been set forth herein contribute to an overall system which has been found to be unusually efficient for the stated purpose of curing dentures and like objects, and the parameters as disclosed and claimed are preferred for the practice of this invention.

The object is placed under the light for a time of about ½ to 15 minutes, during which the object is moved cyclically relative to the lamp or lamps. Collimated light is directed onto the object at the preferred angle, from a distance of about 10 cm and with a power at the object surface of at least about 50 mw/cm$^2$. Based on visual observations of a denture undergoing light curing, improved direct light penetration is achieved. Also, visual observation has revealed that there is light curing of shaded areas, i.e. areas shaded by opaque material. This is believed to result from scattering of light rays that, due to the collimated light, have penetrated deeply into the translucent denture material.

In some embodiments, it may be desirable to equip the curing chamber 65 with air circulating means in the general manner disclosed with respect to chamber 64, or the two chambers may be interconnected.

According to the invention the light is projected onto the curable material from a plurality of light sources positioned at different degree settings of an imaginary 360° circle. As shown in Figure 2, the lamps 30, 31, 32 and 33 are positioned one in each of the four 90° quadrants of an imaginary 360° circle around the object D. The circle is envisioned as extending around the object in a horizontal plane. The light sources or lamps are preferably positioned in at least three of the quadrants and preferably positioned so that all quadrants of the imaginary 360° circle are simultaneously projected with light at the periphery of the light curable material.

The light sources are preferably aimed with the center of the projected light from each light source approximately crossing an imaginary line corresponding with the average vertical height or the outer peripheral massive positions of the light curable material. By massive portions, it is meant to eliminate distortions in position due to small thin projecting portions which, in general, would not be expected to exhibit severe curing problems. The projected light is preferably projected at an angle of 20 to 45° from an imaginary horizontal plane taken at the lowermost portion of light curable material which corresponds to the top surface of the Table 52 in Figure 1.

Preferably the light curable material is positioned for curing by adjusting the height of the support or Table 52. The table is preferably rotated as previously discussed.

To achieve the depth of penetration providing the best results in thick objects, the light should be of high intensity in the activation wavelength region. High intensity light is further important to compensate for the loss of cure efficiency on the cured object surface by oblique incident light.

While a source of high intensity light in the activation band is indicated, the adverse heating effects normally associated with such a source should be avoided on the article being cured to avoid damage in the usual instance. By adverse heating effects, it is meant quantities of radiant heat that cause the article being cured to change shape due to heat induced flow or thermal expansion. An embodiment of the present invention avoids these adverse heating effects by heat absorption and reflection filters without substantial loss of light in the activation band.

The removal of red and infrared light rays in the wave length range between 700 nm and 2400 nm is important to limit because of heating that demonstrates an adverse effect on light sensitive materials if not properly filtered. If excess infrared energy is permitted in the collimated light beam, excessive temperature rise in the material may result, causing rapid changes in the material to reduce viscosity or if sufficiently high, results in decomposition of the material. Because of an excessive high temperature rise problem in material, optical filtering is important to reduce the red and infrared wave lengths between 700 nm and 2400 nm. For example, a 41 volt, 200 watt tungsten halogen lamp operated at −20% of its rated voltage or at 32.8 voltage having a 50 mm diameter parabolic reflector delivers a total of 35 watts at 6 cm distance from the reflector rim. In a preferred application of the invention, such as shown in Figure 2, where four (4 lamps are used, the material receives about 140 watts of optical power from wave lengths that are present in the light beam between 700 nm and 2400 nm. A heat-reflecting filter placed in the optical beam path can be made to reflect or virtually remove wave lengths between 700 nm and 1100 nm. This reduces the power delivered from the parabolic reflector to 17.5 watts per lamp or a total of 70 watts delivered to the material using four (4) lamps. This is a 50% reduction in heating rays of the light beam. The addition of a second heat-absorbing filter is capable of removing wave lengths between 700 nm and 2400 nm and further reducing the red and infrared rays from the beam when used in conjunction with the heat reflecting filter to 1.4 watts or a total of 5.6 watts, using the four (4) lamps in the preferred application. This is a net reduction of 96% of the heating rays in the light beam delivered to the material.

The addition of a heat-absorbing filter only that is capable of removing wave lengths between 700 and 2400 nm reduces the red and infrared rays from the beam to 2.8 watts, or a total of 11.2 watts using four (4) lamps in the preferred application. This is a net reduction of 92% of the heating rays in the light beam delivered to the materials.

In special instances, some of the parameters previously delineated can be varied to advantage in preferred ranges. For example, the table may be rotated at from 0.5 to 50 rpm and the lamps or light source faces may be 1 to 15 cm, or more for large objects, from their closest approach to the surface to be cured.

The apparatus of the present invention is adapted for use in hospitals and other medical uses where special needs exist, as contrasted to industrial equipment. The use of collimated light enables operation with a minimum of heat, which provides for safer operation in medical applications. The apparatus further provides a greater amount of cure power with the least amount of infrared generation, and with a minimum amount of input power required. A further feature that enables operation at low power is the fact that with collimated light there is less scattering of the light, resulting in a higher efficiency utilization. Thus, the curing apparatus of this invention enables a compact light weight construction and operates at a relatively cool temperature, which is a substantial advantage in medical applications. Also, due to the minimized power requirements it can be operated from a standard 110 volt line.

**Claims**

1. Visible light curing apparatus for curing dental objects, comprising

support means defining a substantially horizontal surface (52) having a center axis (55) for supporting a dental object (D) composed at least in part of light curable material; and

collimated light sources positioned to direct collimated light onto said object, said light sources (30, 31, 32) being angularly distributed around said support axis and said light sources (30, 31, 32) being positioned to direct collimated light onto said dental object at an angle of 20° to 45° with respect to the plane of said horizontal surface (52), said sources providing a substantially constant light flux of at least about 50 mw/cm$^2$ at the surface of the object being cured.

2. The apparatus according to Claim 1, wherein each of said light sources (30, 31, 32) comprises an IR reflecting filter (39) and a visible light bandpass filter (38), said bandpass filter passing wavelengths in the 350 to 600 nm range.

3. The apparatus according to Claim 2, wherein each of said light sources (30, 31, 32) comprises a tungsten halogen lamp (43).

4. The apparatus according to Claim 1, wherein each of said light sources (30, 31, 32) provides a collimated beam having a diameter of at least about 5 cm (2 inches).

5. The apparatus according to Claim 1, wherein each of said light sources comprises a lamp having a power rating of at least about 175 to 200 watts, and wherein each said light source provides a beam of at least about 50 mw/cm$^2$.

6. The apparatus according to Claim 5, comprising a transformerless regulated power supply (48) connected to power said light sources (30, 31, 32), and wherein each of said light sources is related to operate with an applied voltage in the range of 30 to 60 volts.

7. The apparatus according to Claim 6, wherein said power supply (48) provides a voltage to each of said lamps such that they each operate at about 10 to 25% less than rated power.

8. The apparatus according to Claim 6, wherein each of said lamps operates at about 41 volts.

9. The apparatus according to Claim 1, comprising moving means (54) for providing relative movement of the surface (52) of said support means relative to said light sources (30, 31, 32).

10. The apparatus according to Claim 9, wherein said moving means (54) comprises rotating means for rotating said support means about said axis.

11. The apparatus according to Claim 10, wherein said rotating means rotates said support means at about 5 to 25 rpm.

12. The apparatus according to Claim 1, characterized by four light sources positioned at approximately 90° intervals around said support means axis.

13. The apparatus according to Claim 1, comprising a housing (50) within which said apparatus is housed, an enclosure means (60) for creating a still air chamber (65) within which said support means is positioned, and a circulating air chamber (64) containing air circulation means (68) so as to cool said light sources (30, 31, 32), said enclosure having openings into which are mounted the faces (35) of each of said light sources.

14. The apparatus according to Claim 9, wherein said moving means comprises means for moving the height of said support surface.

15. The apparatus as described in Claim 1, wherein each of said lights is positioned to direct its beam at said surface at an angle of about 25° to 45° from said surface.

16. The apparatus according to Claim 1, wherein each said source output is 5 to 13 cm from the center of said surface.

17. The apparatus according to Claim 1, wherein said light sources are positioned so that said beams are directed onto said surface in a partially overlapping manner.

**Patentansprüche**

1. Mit sichtbarem Licht arbeitende Aushärteinrichtung zum Aushärten dentaler Objekte, mit

einer eine im wesentlichen horizontale Oberfläche (52) bildenden und eine Zentralachse (55) aufweisenden Trägereinrichtung zum Tragen eines dentalen Objekts (D), das wenigstens zum Teil aus durch Licht härtbarem Material besteht, und

Kollimatorlichtquellen, die so angeordnet sind, daß sie kollimiertes Licht auf das Objekt werfen, wobei die Lichtquellen (30, 31, 32) unter einem Winkel stehend um die Trägerachse herum angeordnet sind, die Lichtquellen (30, 31, 32) so positioniert sind, daß sie kollimiertes Licht auf das dentale Objekt unter einem Winkel von 20° bis 45° zur Ebene der horizontalen Oberfläche (52) abstrahlen, und die Quellen einen im wesentlichen konstanten Lichtfluß von wenigstens etwa 50 mw/cm² auf die Oberfläche des auszuhärtenden Objekts auftreffen lassen.

2. Aushärteinrichtung nach Anspruch 1, dadurch gekennzeichnet, daß jede der Lichtquellen (30, 31, 32) einen IR Reflexionsfilter (39) und einen Bandpaßfilter (38) für sichtbares Licht aufweist, wobei der Bandpaßfilter (38) Wellenlängen im Bereich von 350 bis 600 nm passieren läßt.

3. Aushärteinrichtung nach Anspruch 2, dadurch gekennzeichnet, daß jede der Lichtquellen (30, 31, 32) eine Wolfram-Halogen-Lampe (43) enthält.

4. Aushärteinrichtung nach Anspruch 1, dadurch gekennzeichnet, daß jede der Lichtquellen (30, 31, 32) einen kollimierten Strahl mit einem Durchmesser von wenigstens etwa 5 cm (2 inch) liefert.

5. Aushärteinrichtung nach Anspruch 1, dadurch gekennzeichnet, daß jede der Lichtquellen eine Lampe mit einer Leistung von wenigstens etwa 175 bis 200 Watt aufweist, und daß jede der Lichtquellen einen Strahl von wenigstens etwa 50 mw/cm² liefert.

6. Aushärteinrichtung nach Anspruch 5, gekennzeichnet, durch eine transformatorlose, geregelte Leistungsversorgung (48) zur Versorgung der Lichtquellen (30, 31, 32) mit Leistung, wobei jede der Lichtquellen zum Betrieb eine Spannung im Bereich von 30 bis 60 Volt erhält.

7. Aushärteinrichtung nach Anspruch 6, dadurch gekennzeichnet, daß die Leistungsversorgung (48) an jede der Lampen eine Spannung liefert, derart, daß sie jeweils bei einer um 10 bis 25% geringeren Leistung als die Nennleistung arbeiten.

8. Aushärteinrichtung nach Anspruch 6, dadurch gekennzeichnet, daß jede der Lampen bei etwa 41 Volt arbeitet.

9. Aushärteinrichtung nach Anspruch 1, gekennzeichnet, durch eine Antriebseinrichtung (54) zur Bewegung der Oberfläche (52) der Trägereinrichtung relativ zu den Lichtquellen (30, 31, 32).

10. Aushärteinrichtung nach Anspruch 9, dadurch gekennzeichnet, daß die Antriebseinrichtung (54) eine Dreheinrichtung zum Drehen der Trägereinrichtung um die Achse aufweist.

11. Aushärteinrichtung nach Anspruch 10, dadurch gekennzeichnet, daß die Dreheinrichtung die Trägereinrichtung mit etwa 5 bis 25 rpm dreht.

12. Aushärteinrichtung nach Anspruch 1, gekennzeichnet, durch vier Lichtquellen, die im Abstand von etwa 90° um die Achse der Trägereinrichtung herum angeordnet sind.

13. Aushärteinrichtung nach Anspruch 1, gekennzeichnet, durch ein sie aufnehmendes Gehäse (50), eine Umhüllung (60) zur Bildung einer Kammer (65) mit ruhender Luft, in der die Trägereinrichtung positioniert ist, und eine Umluftkammer (64), die eine Luftumwälzeinrichtung (68) enthält, um die Lichtquellen (30, 31, 32) zu kühlen, wobei diese Umhüllung Öffnungen aufweist, in welchen jeweils die Frontseite (35) einer der Lichtquellen zu liegen kommt.

14. Aushärteinrichtung nach Anspruch 9, dadurch gekennzeichnet, daß die Antriebseinrichtung eine Einrichtung zur Veränderung der Höhe der Trägeroberfläche aufweist.

15. Aushärteinrichtung nach Anspruch 1, dadurch gekennzeichnet, daß jede der Lichtquellen so positioniert ist, daß sie ihren Strahl auf die genannte Oberfläche unter einem Winkel von etwa 25° bis 45° zur Oberfläche abgibt.

16. Aushärteinrichtung nach Anspruch 1, dadurch gekennzeichnet, daß jeder der Quellenausgänge 5 bis 13 cm vom Zentrum der Oberfläche entfernt ist.

17. Aushärteinrichtung nach Anspruch 1,

EP 0 128 324 B1

dadurch gekennzeichnet, daß die Lichtquellen so positioniert sind, daß sie die auf die Oberfläche gerichteten Strahlen teilweise überlappen.

## Revendications

1. Appareil de durcissement en lumière visible en vue de durcir des prothèses dentaires, comportant

un support délimitant une surface (52) sensiblement horizontale possédant un axe central (55) en vue de supporter une prothèse dentaire (D) constituée au moins en partie d'un matériau pouvant être durci à la lumière; et

des sources de lumière collimatées disposées pour diriger de la lumière collimatée sur ladite prothèse, lesdites sources de lumière (30, 31, 32) étant réparties angulairement autour de l'axe dudit support et lesdites sources de lumière (30, 31, 32) étant disposées pour diriger de la lumière collimatée sur ladite prothèse selon un angle de 20° à 45° par rapport au plan de ladite surface horizontale (52), lesdites sources délivrant un flux lumineux sensiblement constant d'au moins environ 50 mw/cm² sur la surface de la prothèse à durcir.

2. Appareil selon la revendication 1, dans lequel chacune desdites sources de lumière (30, 31, 32) comporte un filtre réfléchissant IR (39) et un filtre passe-bande de lumière visible, ledit filtre passe-bande laissant passer des longueurs d'onde dans la plage comprise entre 350 et 600 nm.

3. Appareil selon la revendication 2, dans lequel chacune desdites sources de lumière (30, 31, 32) comporte une lampe halogène à filament de tungstène (43).

4. Appareil selon la revendication 1, dans lequel chacune desdites sources lumineuses (30, 31, 32) délivre un faisceau collimaté ayant un diamètre d'au moins environ 5 cm.

5. Appareil selon la revendication 1, dans lequel chacune desdites sources lumineuses comporte une lampe ayant une puissance nominale d'au moins environ 175 à 200 watts, et dans lequel chacune desdites sources lumineuses délivre un faisceau d'au moins 50 mw/cm².

6. Appareil selon la revendication 5, comportant une alimentation régulée sans transformateur (48) reliée pour alimenter lesdites sources lumineuses (30, 31, 32) et dans lequel chacune desdites sources lumineuses est prévue pour fonctionner avec une tension appliquée comprise entre 30 et 60 volts.

7. Appareil selon la revendication 6, dans lequel ladite alimentation (48) délivre une tension à chacune desdites lampes de telle sorte qu'elles fonctionnent chacune à environ 10 à 25% au-dessous de la puissance nominale.

8. Appareil selon la revendication 6, dans lequel chacune desdites lampes fonctionne à environ 41 volts.

9. Appareil selon la revendication 1, comportant des moyens de déplacement (54) en vue d'assurer un mouvement relatif de la surface (52) dudit support par rapport auxdites sources lumineuses (30, 31, 32).

10. Appareil selon la revendication 9, dans lequel lesdits moyens de déplacement (54) comportent des moyens d'entraînement en rotation en vue de faire tourner ledit support autour dudit axe.

11. Appareil selon la revendication 10, dans lequel lesdits moyens d'entraînement en rotation font tourner ledit support à environ 5 à 25 tours/minute.

12. Appareil selon la revendication 1, caractérisé par quatre sources lumineuses disposées à des intervalles d'environ 90° autour de l'axe dudit support.

13. Appareil selon la revendication 1, comportant un boîtier (50) à l'intérieur duquel est logé ledit appareil, une enceinte (60) en vue de créer une chambre d'air calme (65) à l'intérieur de laquelle est positionné ledit support, et une chambre de circulation d'air (64) contenant des moyens de circulation d'air (68) de façon à refroidir lesdites sources lumineuses (30, 31, 32), ladite enceinte possédant des ouvertures dans lesquelles sont montées les faces (35) de chacune desdites sources lumineuses.

14. Appareil selon la revendication 9, dans lequel lesdits moyens de déplacement comportent des moyens en vue de déplacer la hauteur de ladite surface support.

15. Appareil selon la revendication 1, dans lequel lesdites sources lumineuses est positionnée pour diriger son faisceau sur ladite surface selon un angle d'environ 25° à 45° par rapport à ladite surface.

16. Appareil selon la revendication 1, dans lequel la sortie de chacune desdites sources est à 5 à 13 cm du centre de ladite surface.

17. Appareil selon la revendication 1, dans lequel lesdite sources lumineuses sont positionnées de sorte que lesdits faisceaux soient dirigés sur ladite surface de manière à se recouvrir partiellement.

7

TRANSFORMERLESS
REGULATED
POWER SUPPLY

48

50

45

46

64

47

TO 4th
LAMP

32

60

31

2

60

35

30

60

65

D

52

55

54

58

_Fig. 1_

1

*Fig. 2*